Europäisches Patentamt

European Patent Office

Office européen des brevets

(19)

(11) Numéro de publication : **0 055 159**
**B1**

(12) **FASCICULE DE BREVET EUROPÉEN**

(45) Date de publication du fascicule du brevet :
21.11.85

(21) Numéro de dépôt : 81401914.7

(22) Date de dépôt : 02.12.81

(51) Int. Cl.⁴ : **G 05 B 19/10, D 06 F 33/02**

(54) Programmateur électronique pour machine à laver le linge, et machine comportant un tel programmateur.

(30) Priorité : 12.12.80 FR 8026413

(43) Date de publication de la demande :
30.06.82 Bulletin 82/26

(45) Mention de la délivrance du brevet :
21.11.85 Bulletin 85/47

(84) Etats contractants désignés :
DE GB IT

(56) Documents cités :
FR-A- 2 368 749
FR-A- 2 409 339
FR-A- 2 416 970
FR-A- 2 444 966
FR-A- 2 450 305
US-A- 4 084 237

(73) Titulaire : ESSWEIN S.A.
67, quai Paul-Doumer
F-92400 Courbevoie (FR)

(72) Inventeur : Didier, Laurent
THOMSON-CSF SCPI 173, bld Haussmann
F-75360 Paris Cedex 08 (FR)
Inventeur : Geay, Jean-Claude
THOMSON-CSF SCPI 173, bld Haussmann
F-75360 Paris Cedex 08 (FR)

(74) Mandataire : Phan, Chi Quy et al
THOMSON-CSF SCPI 173, Bld Haussmann
F-75379 Paris Cedex 08 (FR)

Jouve, 18, rue St-Denis, 75001 Paris, France

## Description

L'invention est relative à un programmateur électronique pour machine à laver le linge.

Les programmateurs connus jusqu'à présent permettent des nombres variables de programmes de lavage.

Certains programmateurs permettent un grand nombre de programmes de lavage. Leur utilisation est généralement ressentie comme constituant une opération compliquée par les utilisateurs habituels des machines à laver car ceux-ci doivent sélectionner un programme par le choix de paramètres de diverses natures : type de linge, degré de salissure, quantité de linge, etc...

Par contre si le programmateur est tel qu'il ne permet qu'un nombre limité de programmes son utilisation peut être simple mais cette simplicité est obtenue au détriment de la qualité du lavage car l'utilisateur, en raison du faible choix, ne dispose alors pas en général du programme qui convient exactement au linge qu'il a à laver.

L'invention permet de concilier les qualités — considérées jusqu'à présent comme contradictoires — de simplicité d'utilisation et de variété dans le choix des programmes.

On connaît déjà (Brevet US 4 084 237) une machine à laver le linge à usages professionnels comportant une mémoire morte ROM préprogrammée pour permettre un grand nombre de programmes de lavage. Des moyens de sélection sont prévus pour que le fabricant ou l'installateur ne présélectionne que ceux des cycles de fonctionnement qui correspondent aux besoins de l'utilisateur ; ce dernier n'a alors qu'à appuyer sur une touche pour faire démarrer le programme sélectionné par l'installateur. Mais la machine connue n'est pas utilisable telle quelle pour des usages domestiques.

L'invention résulte de la constatation que, dans une famille, le type de linge et les charges de linge sont pratiquement toujours les mêmes, c'est-à-dire que même si la machine permet un grand nombre de programmes de lavage un même utilisateur ne choisit habituellement qu'un nombre très limité de ces programmes.

Le programmateur selon l'invention est du type permettant de composer un grand nombre de programmes de lavage ; il comprend un microprocesseur équipé d'une mémoire morte adressable dans laquelle sont stockés des blocs préétablis de programmes de fonctionnement optimaux, et un ensemble de sélection comprenant des moyens permettant d'adresser la mémoire morte pour former, à partir des blocs préétablis, des programmes de lavage répondant aux nécessités de l'utilisateur, le microprocesseur et l'ensemble de sélection étant reliés à travers des interfaces d'entrée et de sortie et échangeant des données de commande à travers une interface de commande, et des données d'informations internes à travers une interface capteur, avec les organes électromécaniques de la machine à laver le linge. le microprocesseur comporte en outre trois mémoires vives du type à lecture-écriture et l'ensemble de sélection comporte, sur un panneau de commande accessible à l'utilisateur, des moyens d'introduction de données qui, scrutés par le microprocesseur, une fois les données acquises par ce dernier, réalisent une sélection des blocs de programmes préétablis ou de programme préétabli dans la mémoire morte adressable en fonction de paramètres tels que la quantité de linge, le type de linge, le degré de salissure et la fin de programme, les modifient au choix de l'utilisateur, et les enregistrent dans les trois mémoires vives sous la forme de trois programmes différents complets dont chacun est rappelable par manœuvre d'une touche associée à une mémoire vive.

Il est vrai qu'il est connu (FR-A-2 368 749), dans un dispositif de commande par programme pour l'exécution de prises de vues d'un dispositif de prises de vues radiographiques, de prévoir des mémoires fixes dont les sorties sont reliées, par l'intermédiaire d'un circuit de sélection de programme, aux composants qu'elles commandent et une mémoire librement programmable qui permet de mémoriser un programme quelconque conformément aux désirs du praticien et de sélectionner un programme quelconque en cas de besoin. Mais dans ce dispositif les mémoires fixes contiennent des programmes complets et non des blocs de programmes et il n'est pas prévu un nombre de mémoires vives égal à 3 ; en outre, le document antérieur ne suggère pas la possibilité de simple actionnement d'une ou deux touches lors d'une utilisation ultérieure.

L'invention n'élimine pas complètement la difficulté de choix de sparamètres pour composer un programme de lavage mais cette difficulté n'est à surmonter qu'une seule fois, lors de la première utilisation de la machine, ou de façon peu fréquente. Par contre une fois le programme sélectionné, l'utilisateur devra pour ses lavages ultérieurs, actionner seulement une ou deux touches ou boutons. L'utilisation courante d'une telle machine est donc d'une extrême simplicité.

D'autres caractéristiques et avantages de l'invention apparaîtront avec la description d'exemples de réalisation et des dessins ci-annexés sur lesquels :

la figure 1 est un schéma d'un tableau de commande et de contrôle, ou ensemble de sélection, d'une machine équipée d'un programmateur selon l'invention, et

la figure 2 est un schéma de programmateur selon l'invention.

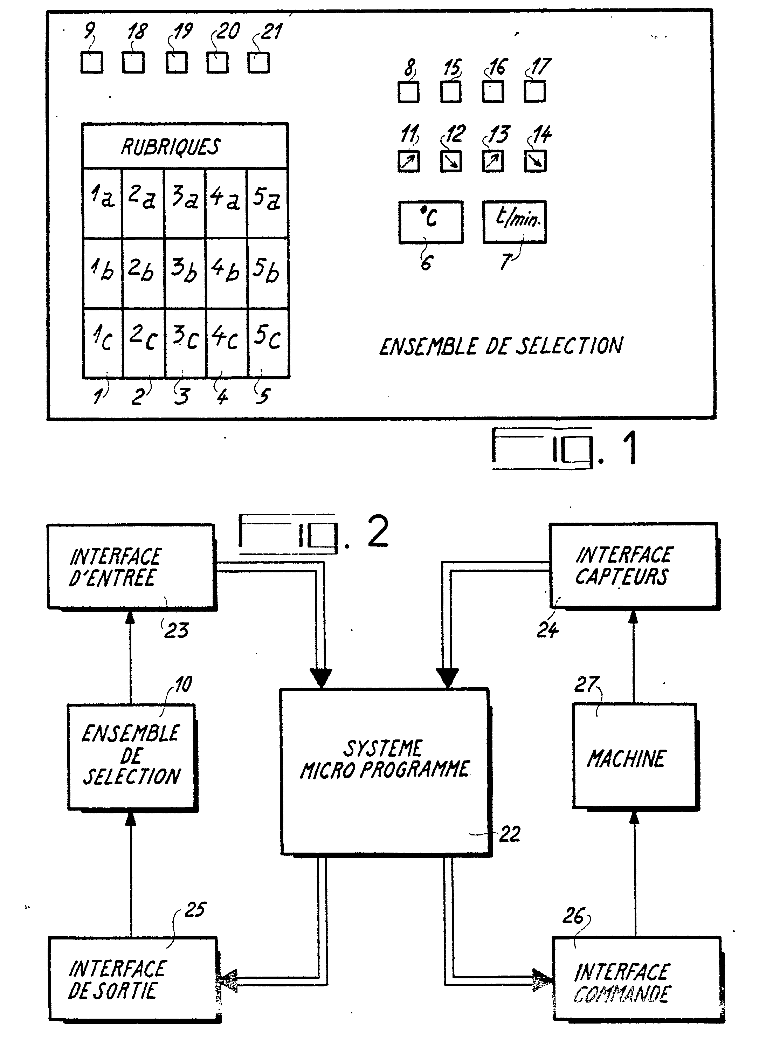

La figure 1 représente le panneau frontal 10 de commande d'une machine à laver le linge. Ce panneau 10 présente également des voyants ou témoins de l'introduction dans une mémoire de données pour la commande de la machine.

Pour la composition d'un programme de lavage le tableau 10 comporte tout d'abord des touches assemblées en rubriques selon cinq colonnes, respectivement 1 à 5 ;

La colonne 1 est destinée à introduire le paramètre « quantité de linge ». Elle présente trois touches $1_a$, $1_b$, $1_c$. L'actionnement de la touche $1_a$ correspond à une charge de linge comprise entre 1 et 2 kg, l'actionnement de la touche $1_b$ correspond à une charge de 2 à 3 kg et l'actionnement de la touche $1_c$ à une charge de 3 à 5 kg.

Chacune des colonnes 2 et 3 présente également trois touches respectivement $2_a$, $2_b$, $2_c$ et $3_a$, $3_b$, $3_c$. Chacune de ces six touches correspond à un type déterminé de linge : coton, couleur, synthétique, synthétique résistant, etc...

La colonne 4 présente également trois touches $4_a$, $4_b$, $4_c$ relatives au degré de salisure : l'enfoncement de la touche $4_a$ correspond à du linge très sale, la touche $4_b$ à du linge sale et la touche $4_c$ à du linge peu sale.

Enfin les trois touches $5_a$, $5_b$, $5_c$ de la colonne 5 sont relatives à la commande de la fin de programme : $5_a$ pour l'arrêt cuve pleine d'eau, $5_b$ pour l'arrêt avec égouttage et $5_c$ pour l'essorage.

A chaque touche est associé un voyant, telle qu'une diode électroluminescente, qui indique, lorsqu'il reste allumé, que le programmateur a pris en compte l'enfoncement de la touche correspondante.

Dans l'exemple, à droite des colonnes 1 à 5, se trouvent deux dispositifs d'affichage 6 et 7 sur lesquels apparaissent, après actionnement d'une touche dans chacune des quatre rubriques (quantité de linge, type de linge, degré de salisure et fin de programme), la température de lavage sélectionnée par le programmateur (c'est-à-dire par le programme contenu en mémoire de ce programmateur) et, le cas échéant, la vitesse d'essorage également sélectionnée par le programmateur.

Au-dessus du dispositif 6 d'affichage de la température se trouvent deux touches de commande, respectivement 11 et 12. L'actionnement de la touche 11 permet d'augmenter la température sélectionnée, affichée sur le dispositif 6, tandis que l'actionnement de la touche 12 permet, au contraire, de diminuer cette température sélectionnée. Bien entendu le programme est tel que cette température ne peut varier qu'entre des limites prédéterminées.

De même au dispositif 7 sont associés deux touches 13 et 14 pour permettre, respectivement, l'augmentation et la diminution de la vitesse d'essorage affichée après actionnement des touches des rubriques.

Les ordres séquentiels pendant un cycle de traitement d'une charge de linge tels que le nombre de prélavages, le nombre de lavages, le nombre de rinçages, etc... et tous les paramètres du lavage : durée, température, agitation, niveau d'eau, etc... qui sont à contrôler et à faire exécuter par la machine sont fournis par le programmateur en fonction de programmes optimaux prédéterminés, mémorisés une fois pour toute.

Egalement de façon en soi connue on prévoit des moyens de scrutation des touches sélectionnées ainsi que des moyens de validation afin d'interdire certaines combinaisons comme l'actionnement de deux touches d'une même rubrique.

Lorsqu'un programme a été ainsi sélectionné, il peut, selon une disposition de l'invention, être introduit dans une mémoire. Dans l'exemple le programmateur présente trois mémoires. A chaque mémoire correspond une touche 15, 16 ou 17 appelée ici touche de programmation. Il est ainsi possible de mémoriser trois programmes. Pour effectuer le remplissage d'une mémoire on appuie simultanément sur une touche 15, 16 ou 17 correspondant à une mémoire et sur une touche 8 appelée programme.

Dans l'exemple chaque mémoire associée à la touche 15, 16 ou 17 est un emplcement de mémoire dans un système micro-programmé 22 (figure 2) ou microprocesseur. Une telle mémoire est une mémoire vive de type RAM ou autre.

Pour faire fonctionner la machine selon le programme choisi — que celui-ci ait été ou non mis en mémoire — on appuie sur une touche 19 appelée touche de départ programme.

La machine peut, bien entendu, fonctionner sans mise en mémoire du programme sélectionné.

L'actionnement d'une touche 9 permet de vérifier l'opération qui est effectuée au cours du cycle de lavage. Cette information est présentée sous forme visuelle ou sous forme sonore. Dans le premier cas on utilise les afficheurs 6 et/ou 7, cet affichage pouvant être en clair, en abrégé ou selon un code déterminé. Par exemple la phase d'essorage peut être indiquée en clair par « essorage » en abrégé par « ess » ou en code par « $A_1$ ». Dans le second cas l'information sonore est fournie soit par une suite codée d'impulsions sonores dont le nombre ou la fréquence indique la nature de la phase en cours, soit par synthèse vocale permettant, grâce à un haut-parleur, d'émettre un message avec le nom de la phase de lavage.

Une touche 18 est prévue pour effacer la combinaison choisie, et si la machine a été lancée, d'en arrêter le fonctionnement.

Une touche 20 de marche-arrêt est prévue pour mettre la machine sous tension ou couper l'alimentation.

Enfin l'actionnement d'une touche 21 met en œuvre un programme spécial de trempage.

On se réfère maintenant à la figure 2.

L'ensemble de sélection 10 est relié au microprocesseur 22 par l'intermédiaire, d'une part, d'un interface d'entrée 23 et, d'autre part, d'un interface de sortie 25.

L'interface 23 reçoit deux types de données : les paramètres de charge, sélectionnables selon un nombre limité de possibilités et permettant le choix d'un programme préétabli, par exemple constitué d'une suite de blocs, et des paramètres variationnels, par exemple d'ajustage continu de valeurs, qui fournissent les données internes nécessaires aux blocs d'un programme préétabli précédemment sélectionné.

Le microprocesseur 22 reçoit donc, par l'intermédiaire de l'interface 23, des données de sélection de programme préétabli et des données de programmation. Ce système 22 envoie à l'ensemble 10 des informations nécessaires à l'utilisateur et des ordres de scrutation de l'état des touches de cet ensemble, ce qui réalise le cadencement de l'acquisition des données introduites par l'utilisateur.

Le microprocesseur 22 élabore également des mots de commande qui, mis en forme analogique par un interface de commande 26, permettent d'actionner des relais, des électrovannes, etc... dans la machine 27.

En cours de fonctionnement le microprocesseur 22 demande des informations sur le déroulement du cycle de fonctionnement de la machine. A cet effet des capteurs de vitesse, de température, de pression, de débit et autres envoient des tensions analogiques à un interface capteur 24 qui envoie vers le microprocesseur 22 des mots d'information pris en compte dans son programme.

On décrit maintenant un cycle complet de fonctionnement du programmateur et de la machine selon l'invention.

Après actionnement de la touche 20 toutes les diodes des colonnes 1 à 5 sont allumées. Le microprocesseur 22 scrute alors, suivant un cycle continu, l'état instantané des touches de commande de ces colonnes. Si l'une de ces touches est actionnée (ces touches étant du type à mise en contact seulement lorsqu'une force extérieure s'applique sur elles) le microprocesseur 22 détecte cet actionnement, le stocke dans une mémoire vive RAM, commande l'émission d'un signal sonore indiquant à l'utilisateur que l'actionnement a été détecté, et éteint les diodes des touches de la même rubrique. Par exemple si la touche $1_b$ a été actionnée, les diodes des touches $1_a$ et $1_c$ sont éteintes. Si c'est la touche $3_b$ qui a été actionnée ce sont les diodes des touches $2_a$, $2_b$, $3_a$ et $3_c$ qui s'éteignent.

Si l'utilisateur actionne une touche correspondant à un paramètre tel qu'il conduise à une combinaison jugée impossible un moyen sonore ou visuel, également géré par le microprocesseur 22, l'invite à revoir les choix déjà effectués.

Après actionnement d'une touche de chacune des autres rubriques le microprocesseur choisit l'un des programmes optimaux qui est stocké dans une mémoire morte ROM et permet l'affichage de la température, sur le dispositif 6, et de la vitesse d'essorage, sur le dispositif 7, qui correspondent à ce programme.

L'utilisateur peut alors modifier à volonté, dans des limites fixées par le constructeur, et bien entendu intégrées au microprocesseur 22, les valeurs de la température et de la vitesse d'essorage. En variante d'autres paramètres sont modifiables.

Après ces modifications éventuelles une nouvelle combinaison de paramètres est ainsi sélectionnée. Un programme d'interdiction empêche de choisir des valeurs incompatibles.

Quand une combinaison valide est effectuée, elle peut être mise en mémoire par l'actionnement simultané d'une touche 8 et de l'une des touches 15 à 17.

L'utilisateur dispose ainsi d'un programme personnalisé ou « programme à la demande » qu'il peut ensuite réutiliser par actionnement d'une seule touche 15, 16 ou 17.

Lorsque la machine est en marche le programme interne de scrutation des touches correspondant aux paramètres de charge est arrêté, l'actionnement de ces touches devient alors sans effet. Par contre les paramètres variationnels (température et vitesse d'essorage) peuvent encore être modifiés après le départ du programme.

L'actionnement de la touche 18 relance le programme de scrutation des touches correspondant aux paramètres de charge.

La machine présente des organes pour en assurer la sécurité de fonctionnement :

sécurité de chauffage pour éviter le chauffage à sec ;

sécurité de vidange : si une anomalie apparaît les diodes des touches $5_a$, $5_b$, $5_c$ clignotent ;

sécurité en cas de non alimentation en eau ou de porte non fermée : dans ce cas les diodes des touches $4_a$, $4_b$, $4_c$ clignotent ;

sécurité anti-débordement : dans ce cas la pompe de vidange est actionnée et les diodes des touches $2_a$, $2_b$, $2_c$, $3_a$, $3_b$, $3_c$ clignotent ;

sécurité en cas de défaut de l'organe de mesure ou de commande de la température : l'alimentation des résistances chauffantes est alors empêchée et les diodes des touches $1_a$, $1_b$, $1_c$ clignotent.

A la fin du déroulement d'un programme, ou après annulation d'un programme avec la touche 18, toutes les diodes des touches de rubrique s'allument comme pour un début de sélection de programme.

L'utilisation de la machine équipée d'un programmateur selon l'invention est ainsi particulièrement simple malgré le grand nombre de programmes qu'elle permet.

En outre l'invention permet de réaliser une programmation masquée par simple sélection de valeurs, le système micro-programmé se programmant alors lui-même.

Les touches de commande peuvent être de diverses natures : à poussoir, à bouton rotatif, à effleurement, à capteur de chaleur ou à variation d'impédance électrique.

**Revendications**

1. Programmateur électronique pour une machine (27) à laver le linge du type permettant un grand nombre de programmes de lavage, ledit programmateur comprenant :

un microprocesseur (22) équipé d'une mémoire morte adressable (ROM) dans laquelle sont stockés des blocs préétablis de programmes de fonctionnement optimaux,

un ensemble de sélection (10) comprenant des moyens permettant d'adresser ladite mémoire morte adressable (ROM) pour former, à partir desdits blocs préétablis, des programmes de lavage répondant aux nécessités de l'utilisateur,

le microprocesseur (22) et l'ensemble de sélection (10) étant reliés à travers des interfaces d'entrée (23) et de sortie (25) et échangeant des données de commande, à travers une interface de commande (26), et des données d'information interne, à travers une interface capteurs (24), avec les organes électromécaniques de ladite machine à laver le linge (27), le programmateur étant caractérisé en ce que le microprocesseur (22) comporte en outre trois mémoires vives du type à lecture-écriture (RAM) et en ce que l'ensemble de sélection (10) comporte, sur un panneau de commande accessible à l'utilisateur, des moyens (1-7) d'introduction de données qui, scrutés par le microprocesseur (22), une fois les données acquises par ce dernier, réalisent une sélection des blocs de programmes préétablis ou de programme préétabli dans la mémoire morte adressable (ROM) en fonction de paramètres tels que la quantité de linge, le type de linge, le degré de salissure, et la fin de programme, les modifient au choix de l'utilisateur, et les enregistrent dans lesdites trois mémoires vives (RAM), sous la forme de trois programmes différents complets dont chacun est rappelable par manœuvre d'une touche (15, 16, 17) associée à une mémoire vive (RAM).

2. Programmateur selon la revendication 1, caractérisé en ce qu'il est monté pour que l'enregistrement dans une mémoire vive s'effectue par actionnement d'une touche de mise en mémoire (8) et d'une touche (15, 16, 17) avec laquelle est obtenue ultérieurement la mise en route du programme mis en mémoire.

3. Programmateur selon la revendication 1 ou 2, caractérisé en ce que les données de programme que peut choisir l'utilisateur sont de deux sortes : des données sélectionnables selon un nombre limité de possibilités et des données variationnelles sélectionnables avec une valeur quelconque entre des limites prédéterminées.

4. Programmateur selon la revendication 3, caractérisé en ce que la température de lavage et/ou la vitesse d'essorage sont des données variationnelles.

5. Programmateur selon la revendication 3 ou 4, caractérisé en ce qu'à chaque donnée variationnelle est associé un dispositif d'affichage (6 ou 7) et deux touches (11, 12 ou 13, 14) dont l'actionnement de l'une (11 ou 13) permet d'augmenter la valeur du paramètre associé et dont l'actionnement de l'autre (12 ou 14) permet de diminuer cette valeur.

6. Programmateur selon l'une quelconque des revendications 3 à 5, caractérisé en ce qu'à chaque donnée sélectionnable parmi un nombre limité de possibilités correspond une touche ($1_a$ à $1_c$, $2_a$ à $2_c$, $3_a$ à $3_c$, $4_a$ à $4_c$, $5_a$ à $5_c$).

7. Programmateur selon l'une quelconque des revendications précédentes, caractérisé en ce qu'il comprend un moyen pour afficher l'opération qu'est en train d'effectuer la machine, par exemple par actionnement d'une touche (9).

8. Programmateur selon les revendications 5 et 7, caractérisé en ce que le dispositif d'affichage (6 ou 7) de donnée variationnelle permet également l'affichage de l'opération.

9. Programmateur selon l'une quelconque des revendications précédentes, caractérisé en ce qu'il comporte un moyen pour effacer les données sélectionnées par actionnement d'une touche (18).

10. Programmateur selon l'une quelconque des revendications précédentes, caractérisé en ce qu'il comporte un moyen pour mettre en route un programme spécial, tel qu'un programme de trempage, par actionnement d'une touche (21).

11. Programmateur selon l'une quelconque des revendications précédentes, caractérisé en ce qu'à chaque touche d'introduction de paramètre est associé un témoin lumineux et en ce que des moyens sont prévus pour que les témoins soient allumés avant la sélection et pour qu'après la sélection seul le témoin correspondant au paramètre sélectionné reste allumé.

12. Programmateur selon l'une quelconque des revendications 3 à 6, caractérisé en ce que les paramètres sélectionnables selon un nombre limité de possibilités ne peuvent plus être modifiés après le début du fonctionnement de la machine et en ce que les paramètres variationnels peuvent être encore modifiés après ce début de fonctionnement.

13. Utilisation d'un programmateur selon l'une quelconque des revendications précédentes dans une machine à laver le linge.

14. Utilisation d'un programmateur selon la revendication 11, dans une machine à laver le linge qui comprend des moyens de surveillance du bon fonctionnement des organes de la machine et des moyens pour faire clignoter les témoins lumineux en cas de défaillance d'un organe, un témoin lumineux ou groupe de témoins lumineux étant associé à un organe déterminé de la machine.

**Claims**

1. An electronic program controller for a washing machine (27) of the type allowing a plurality of washing programs, said controller comprising :

a microprocessor (22) including an addressable read-only-memory (ROM), in which pre-established blocks of optimum operation programs are stored,

a selection assembly (10) comprising means for addressing said addressable read-only-memory (ROM) in order to constitute washing programs according to the user's necessities on the basis of said pre-established blocks,

the microprocessor (22) and the selection assembly (10) being connected via input (23) and output (25) interfaces and exchanging control data through a control interface (26) and internal information data through a probe interface (24) with the electro-mechanical means of said washing machine (27), the controller being characterized in that the microprocessor (22) further comprises three random access memories (RAM) of the read-write-type, and that the selection assembly (10) comprises, on a control panel which is accessible to the user, means (1 to 7) for introducing data which after their aquisition and scanning by the microprocessor (22) cause a selection of pre-established program blocks or a program from the read-only-memory (ROM) in dependence of parameters such as quantity of the laundry, type of laundry, the soil degree and the aim of the program, cause their modification according to the choice of the user and their registration in said three random access memories (RAM) in the form of three complete different programs which can be activated respectively by acting on a push-button (15, 16, 17) associated to a random access memory (RAM).

2. A controller according to claim 1, characterized in that it is conceived in such a way that the writing into a random access memory is obtained by acting on a memorizatrion push-button (8) and on a push-button (15, 16, 17) by which the start of the memorized program is later-on obtained.

3. A controller according to claim 1 or 2, characterized in that the program data which can be chosen by the user are of two kinds : choosable data according to the limited number of possibilities and choosable variation data for defining any value between predetermined limits.

4. A controller according to claim 3, characterized in that the washing temperature and/or the speed of the spin-drying are variation data.

5. A controller according to claim 3 or 4, characterized in that to each one of the variation data, a display device (6 or 7) and two push buttons (11, 12 or 13, 14) are associated, the actuation of one of them (11 or 13) causing the increase of the value of the associated parameter and the actuation of the other (12 or 14) causing the decrease of said value.

6. A controller according to any one of claims 3 to 5, characterized in that to each one of the data choosable out of a limited number of possibilities corresponds one push button ($1_a$ to $1_c$, $2_a$ to $2_c$, $3_a$ to $3_c$, $4_a$ to $4_c$, $5_a$ to $5_c$).

7. A controller according to any one of the preceding claims, characterized in that it comprises a means for displaying the operation which the machine is performing, for example by actuating a push button (9).

8. A controller according to claims 5 and 7, characterized in that the display device (6 or 7) for displaying the variation data is conceived to display also the kind of operation.

9. A controller according to any one of the preceding claims, characterized in that it comprises a means for cancelling the data which have been selected, by actuating a push-button (18).

10. A controller according to any one of the preceding claims, characterized in that it comprises a means for starting a special program such as a soaking program by actuating a push-button (21).

11. A controller according to any one of the preceding claims, characterized in that to each push-button for introducing a parameter, a light indicator is associated, and that means are provided activating the indicators prior to the selection, whereas after the selection, only the indicator corresponding to the selected parameter remains activated.

12. A controller according to any one of claims 3 to 6, characterized in that the parameters which can be selected out of a limited number of possibilities cannot be modified any more after the start of the machine, whereas the variation parameters can still be modified after this start.

13. The use of a controller according to any one of the preceding claims in a laundry washing machine.

14. The use of a controller according to claim 11 in a laundry washing machine which comprises means for supervising the operation of the components of the machine and means for making the light indicators blink in the case of malfunction of a component, a light indicator or a group of light indicators being associated to a particular component of the machine.

## Patentansprüche

1. Elektronische Programmsteuereinrichtung für eine Waschmaschine (27) zur Steuerung einer großen Zahl von Waschprogrammen, wobei die Programmsteuereinrichtung enthält :

einen Mikroprozessor (22) mit einem adressierbaren Festwertspeicher (ROM), in dem vorgefertigte Blöcke optimaler Betriebsprogramme gespeichert sind,

eine Auswahleinrichtung (10) mit Mitteln zur Adressierung des adressierbaren Festwertspeichers (ROM) zur Bildung der den Verbraucherwünschen entsprechenden Waschprogramme ausgehend von diesen vorgefertigten Blöcken,

wobei der Mikroprozessor (22) und die Auswahleinrichtung (10) über Eingangs- und Ausgangsinterfaces (23, 25) miteinander verbunden sind und Steuerdaten über ein Steuerinterface (26) sowie interne Informationsdaten über ein Meßsondeninterface (24) mit den elektromechanischen Organen der Waschmaschine (27) austauschen, dadurch gekennzeichnet, daß der Mikroprozessor (22) außerdem drei Aktivspeicher vom Schreib-Lesetyp (RAM) enthält und die Auswahleinrichtung (10) auf einem für den Benutzer zugänglichen Steuerpult Mittel (1 bis 7) zur Einführung von Daten aufweist, die durch den Mikroprozessor (22) ausgewertet werden, sobald dieser die Daten erfaßt hat, und die eine Auswahl von vorgefertigten Programmblöcken oder eines vorgefertigten Programms aus dem Festwertspeicher (ROM) abhängig von Parametern wie z. B. der Menge der Wäsche, der Art der Wäsche, dem Verschmutzungsgrad und dem Programmziel bewirken, diese Programme nach Wahl des Benutzers verändern und sie in den drei Aktivspeichern (RAM) in Form von drei verschiedenen vollständigen Programmen einspeichern, die alle drei druch Betätigung je einer Taste (15, 16, 17), die einem Aktivspeicher (RAM) zugeordnet ist, abgerufen werden können.

2. Programmsteuereinrichtung nach Anspruch 1, dadurch gekennzeichnet, daß sie so ausgebildet ist, daß die Einspeicherung in einen Aktivspeicher durch Betätigung einer Einspeicherungstaste (8) und einer Taste (15, 16, 17) erfolgt, mit der später der Start des gespeicherten Programms bewirkt wird.

3. Programmsteuereinrichtung nach Anspruch 1 oder 2, dadurch gekennzeichnet, daß die Programmdaten, die der Benutzer wählen kann, von zwei Arten sind, nämlich wählbare Daten gemäß einer beschränkten Anzahl von Möglichkeiten und wählbare Variationsdaten mit einem beliebigen Wert zwischen vorgegebenen Grenzen.

4. Programmsteuereinrichtung nach Anspruch 3, dadurch gekennzeichnet, daß die Waschtemperatur und/oder die Schleudergeschwindigkeit Variationsdaten sind.

5. Programmsteuereinrichtung nach Anspruch 3 oder 4, dadurch gekennzeichnet, daß einer Variationsangabe eine Anzeigevorrichtung (6 oder 7) und zwei Tasten (11, 12 oder 13, 14) zugeordnet sind, wobei die Betätigung einer der Tasten (11 oder 13) die Erhöhung des Werts des zugeordneten Parameters und die Betätigung der anderen Taste (12 oder 14) die Verringerung dieses Werts ermöglicht.

6. Programmsteuereinrichtung nach einem beliebigen der Ansprüche 3 bis 5, dadurch gekennzeichnet, daß jeder aus einer begrenzten Anzahl von Möglichkeiten auswählbaren Angabe eine Taste (1$_a$ bis 1$_c$, 2$_a$ bis 2$_c$, 3$_a$ bis 3$_c$, 4$_a$ bis 4$_c$, 5$_a$ bis 5$_c$) entspricht.

7. Programmsteuereinrichtung nach einem beliebigen der vorhergehenden Ansprüche, dadurch gekennzeichnet, daß sie ein Mittel zur Anzeige des gerade in der Maschine ablaufenden Vorgangs aufweist, beispielsweise aufgrund der Betätigung einer Taste (9).

8. Programmsteuereinrichtung nach den Ansprüchen 5 und 7, dadurch gekennzeichnet, daß die Anzeigevorrichtung (6 oder 7) für die Variationsdaten auch die Anzeige des Betriebszustands ermöglicht.

9. Programmsteuereinrichtung nach einem beliebigen der vorhergehenden Ansprüche, dadurch gekennzeichnet, daß sie ein Mittel zum Löschen der ausgewählten Daten durch Betätigung einer Taste (18) aufweist.

10. Programmsteuereinrichtung nach einem beliebigen der vorhergehenden Ansprüche, dadurch gekennzeichnet, daß sie ein Mittel aufweist, um ein spezielles Programm, wie z. B. ein Einweichprogramm, durch Betätigung einer Taste (21) auszulösen.

11. Programmsteuereinrichtung nach einem beliebigen der vorhergehenden Ansprüche, dadurch gekennzeichnet, daß jeder Taste zur Einspeisung eines Parameters eine Leuchtanzeige zugeordnet ist und daß Mittel vorgesehen sind, die dafür sorgen, daß die Leuchtanzeigen vor der Auswahl aufleuchten, während nach der Auswahl nur die dem ausgewählten Parameter entsprechende Leuchtanzeige erleuchtet bleibt.

12. Programmsteuereinrichtung nach einem beliebigen der Ansprüche 3 bis 6, dadurch gekennzeichnet, daß die auswählbaren Parameter gemäß einer beschränkten Anzahl von Möglichkeiten nicht mehr nach dem Anlaufen der Maschine geändert werden können und daß die variierbaren Parameter nach dem Anlaufen der Maschine noch geändert werden können.

13. Verwendung einer Programmsteuereinrichtung nach einem beliebigen der vorhergehenden Ansprüche in einer Waschmaschine.

14. Verwendung einer Programmsteuereinrichtung nach Anspruch 11 in einer Waschmaschine, die Mittel zur Überwachung des Betriebs der Organe der Maschine und Mittel enthält, durch die die Leuchtanzeigen bei einem Fehler eines Organs aufblinken können, wobei eine Leuchtanzeige oder eine Gruppe von Leuchtanzeigen einem bestimmten Organ der Maschine zugeordnet ist.

**0 055 159**

RUBRIQUES

| | | | | |
|---|---|---|---|---|
| 1a | 2a | 3a | 4a | 5a |
| 1b | 2b | 3b | 4b | 5b |
| 1c | 2c | 3c | 4c | 5c |

ENSEMBLE DE SELECTION

°C    t/min.

FIG. 1

FIG. 2

INTERFACE D'ENTREE

ENSEMBLE DE SELECTION

SYSTEME MICRO PROGRAMME

INTERFACE CAPTEURS

MACHINE

INTERFACE DE SORTIE

INTERFACE COMMANDE

1